(19) Europäisches Patentamt
European Patent Office
Office européen des brevets

(11) EP 2 170 079 B1

(12) **EUROPEAN PATENT SPECIFICATION**

(45) Date of publication and mention of the grant of the patent:
**29.05.2013 Bulletin 2013/22**

(21) Application number: **08771973.8**

(22) Date of filing: **26.06.2008**

(51) Int Cl.:
***A01N 57/20*** *(2006.01)* ***A01N 39/02*** *(2006.01)*
***A01N 39/04*** *(2006.01)*

(86) International application number:
**PCT/US2008/068262**

(87) International publication number:
**WO 2009/006169 (08.01.2009 Gazette 2009/02)**

# (54) SYNERGISTIC HERBICIDAL COMPOSITION CONTAINING A SUBSTITUTED PHENOXY ALKANOIC ACID DERIVATIVE AND A GLYPHOSATE DERIVATIVE

SYNERGISTISCHE HERBIZIDE ZUSAMMENSETZUNG, DIE EIN SUBSTITUIERTES PHENOXYALKANSÄUREDERIVAT UND EIN GLYPHOSATE-DERIVAT ENTHÄLT

COMPOSITION HERBICIDE SYNERGIQUE CONTENANT UN DERIVE DE L'ACIDE PHENOXY ALCANOIQUE SUBSTITUE ET UN DERIVE DE GLYPHOSATE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.06.2007 US 937788 P**

(43) Date of publication of application:
**07.04.2010 Bulletin 2010/14**

(60) Divisional application:
**10189235.4 / 2 308 309**
**12174087.2 / 2 505 062**

(73) Proprietor: **Dow AgroSciences LLC**
**Indianapolis IN 46268-1054 (US)**

(72) Inventors:
- **HAACK, Alan**
  **Roseville, CA 95661 (US)**
- **OLSON, Brian**
  **Geneva, NY 14456 (US)**
- **SCHMITZER, Paul**
  **Indianapolis, IN 46250 (US)**

(74) Representative: **Dey, Michael et al**
**Weickmann & Weickmann**
**Patentanwälte**
**Richard-Strauss-Strasse 80**
**81679 München (DE)**

(56) References cited:

| | |
|---|---|
| **WO-A-02/32227** | **WO-A-03/090535** |
| **WO-A-2005/087007** | **GB-A- 2 267 825** |
| **US-A- 4 445 927** | **US-A1- 2006 270 556** |

- **HARTZLER B, OWEN M: "Horseweed-A weed on the rise" INTEGRATED CROP MANAGEMENT, [Online] 24 April 2006 (2006-04-24), XP002502425 Retrieved from the Internet: URL:http: //www.ipm.iastate.edu/ipm/icm/200 6/4-24/horseweed.html> [retrieved on 2008-11-03]**
- **BOERBOOM C: "Horseweed, Resistance, and Wind" WINSCONSIN CROP MANAGER, [Online] 26 April 2007 (2007-04-26), XP002502424 Retrieved from the Internet: URL:http:// ipcm.wisc.edu/Portals/0/Blog/Fi les/ 17/250/WCM%2014(8).pdf> [retrieved on 2008-11-03]**
- **FLINT J L ET AL: "EFFECTS OF GLYPHOSATE COMBINATIONS WITH 2,4-D OR DICAMBA ON FIELD BINDWEED (CONVOLVULUS ARVENSIS)" WEED SCIENCE, WEED SCIENCE SOCIETY OF AMERICA, CHAMPAIGN, IL, US, vol. 37, 1 January 1989 (1989-01-01), pages 12-18, XP001070550 ISSN: 0043-1745**
- **WIESE A F, SALISBURY C D, BEAN B W: "Downy Brome (Bromus tectorum), Jointed Goatgrass (Aegilops cylindrica) and Horseweed (Conyza canadensis) Control in Fallow" WEED TECHNOLOGY, vol. 9, 1995, pages 249-254, XP009108149**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 170 079 B1

## Description

This invention concerns a method of controlling glyphosate-resistant horseweed.

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

Discussion of prior art

Hartzler et al. (Integrated Crop Management (2006), 496, 97) is concerned with the problem of glyphosate tolerance in horseweed, which tolerance increases once bolting of the plant initiates. In order to overcome this problem, the publication proposes administering a herbicidal mixture comprising 2,4-D and glyphosate to the plant for improving consistency with control in fields where stem elongation has occurred at the time of herbicide application.

Boerboom (Wisconsin Crop Manager (2007), 14, 51) is concerned with the wind-promoted migration of glyphosate-resistant horseweed in the U.S. In order to control glyphosate-resistant horseweed, the publication proposes administering a herbicidal mixture comprising 2,4-D and glyphosate to the plant, especially before planting soybeans.

WO 2005/087007 A1 disdoses a herbicidal composition for controlling the growth and proliferation of unwanted plants, which herbicidal composition comprises (a) glyphosate or a herbicidal derivative thereof, (b) at least one auxin herbicide selected from the group consisting of 2,4-D, 2,4-DB, dichlorprop, MCPA, MCPB, mecoprop, dicamba, picloram, quindorac and agriculturally acceptable salts or esters thereof; and (c) at least one surfactant.

US 2006/0270556 A1 disdoses a herbicidal composition comprising an aqueous solution of one to a plurality of salts of glyphosate at a total glyphosate a.e. concentration not less than about 360 g/l, wherein (a) said glyphosate is in anionic form accompanied by low molecular weight non-amphiphilic cations in a total molar amount of about 110% to about 120% of the molar amount of said glyphosate, and (b) a major amount to substantially all of the low molecular weight non-amphiphilic cations are potassium cations.

WO 02/32227 A1 disdoses an essentially non-aqueous homogeneous liquid herbicide composition comprising, inter alia, a lipophilic solvent soluble complex comprising the reaction product of (i) not in excess of about 35% by weight of one or more lipophobic herbicides having an acidic moiety, and (ii) not in excess of about 99% by weight of one or more tertiary dimethylamines of the structure $(CH_3)_2N\text{-}R$, wherein R contains an alkyl group of at least 8 carbon atoms and may contain other chemical moieties, and wherein there is at least one mole equivalent of such amine to each mole of lipophobic herbicide.

US 4,445,927 disdoses a herbicidal composition containing glyphosate or a non-phytotoxic salt thereof, in combination with 2,4-D or $\alpha$-naphthylacetic acid or a non-phytotoxic salt of these compounds. According to the citation, the herbicidal composition allows to reduce the herbicidally effective amount of glyphosate in comparison with compositions containing glyphosate as the sole active ingredient.

GB 2 267 825 A disdoses a water-dispersible herbicide microemulsion concentrate composition comprising, inter alia, from 1-30% by weight of at least one water-insoluble herbicide, and from 1-30% by weight of a water-soluble salt of glyphosate. Example 4 of the citation teaches a microemulsion concentrate comprising 2,4-D isooctyl ester and glyphosate isopropylamine salt.

Flint et al. (Weed Science (1989), 37, 12-18) is concerned with the effects of glyphosate combinations with 2,4-D or dicamba on field bindweed. According to the citation, the application of a composition comprising 2,4-D dimethylamine salt and glyphosate isopropylamine salt results in an additive or synergistic field bindweed control compared to the herbicides applied alone.

Wiese et al. (Weed Technology (1995), 9, 249-254) is concerned with the control of downy brome, jointed goatgrass and horseweed on fallow land. According to the citation, a 95% or better control of downy brome and jointed goatgrass can be obtained by applying a herbicidal composition comprising 2,4-D and glyphosate.

In some cases, herbicidal active ingredients have been shown to be more effective in combination than when applied individually and this is referred to as "synergism." As described in the Herbicide Handbook of the Weed Science Society of America, Seventh Edition, 1994, p. 318, "'synergism' [is] an interaction of two or more factors such that the effect when combined is greater than the predicted effect based on the response of each factor applied separately." The present invention is based on the discovery that substituted phenoxy alkanoic acid derivatives and glyphosate derivatives, already known individually for their herbicidal efficacy, display a synergistic effect when applied in combination.

The herbicidal compounds forming the synergistic composition of this invention are independently known in the art for their effects on plant growth.

For example, 2,4-D, 2,4-dichlorophenoxy acetic acid, is a selective systemic herbicide used to control annual and perennial broad-leaved weeds in various crops as well as in non-crop land, including areas adjacent to water. It is commercially available, for example, as an ester such as Esteron™ herbicide from Dow AgroSciences and as a salt

such as DMA-4™ herbicide from Dow AgroSciences. Dichlorprop, 2,4-dichlorophenoxy propionic acid, is a selective systemic herbicide used to control annual and perennial broad-leaved weeds in various crops as well as in non-crop land. It is commercially available, for example, as a salt such as Dicopur™ DP herbicide or Duplosan™ DP herbicide from Nufarm.

Glyphosate, *N*-(phophonomethyl)glycine, is a non-selective systemic herbicide used to control annual and perennial grasses and broad-leaved weeds, particularly in crops that have been genetically modified to be tolerant of glyphosate. It is commercially available, for example, as Roundup™ herbicide from Monsanto or Glyphomax Plus™ herbicide from Dow AgroSciences.

The present invention relates to a method of controlling glyphosate-resistant horseweed, which comprises contacting the glyphosate-resistant horseweed or the locus thereof with or applying to the soil to prevent the emergence of glyphosate-resistant horseweed an herbicidally effective amount of an herbicidal mixture comprising an herbicidally effective amount of

(a) 2,4-D dimethylamine salt, and
(b) glyphosate isopropylamine salt,

wherein the 2,4-D dimethylamine salt is applied at an application rate of 70 g ae/ha and the glyphosate isopropylamine salt is applied at an application rate of 420 g ae/ha.

The present application also discloses a synergistic herbicidal mixture comprising an herbicidally effective amount of (a) a substituted phenoxy alkanoic acid derivative of the formula

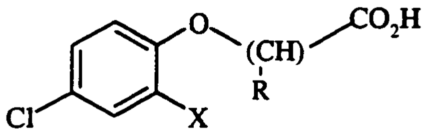

wherein
X represents Cl or $CH_3$;
R independently represents H or $CH_3$; and
n is an integer from 1-3;
and (b) a glyphosate derivative. Preferred substituted phenoxy alkanoic acids are 2,4-D and dichlorprop. The compositions may also contain an agriculturally acceptable adjuvant or carrier.

The present application also discloses a method of controlling the growth of undesirable vegetation, particularly in crops that are tolerant, either naturally or through genetic modification, to the active herbicides of the synergistic mixture, and the use of this synergistic composition.

The species spectrums of the compounds of the synergistic mixture, i.e., the weed species which the respective compounds control, are broad and highly complimentary. While glyphosate is a non-selective herbicide, resistance to glyphosate by several weed species, for example, horseweed (*Conyza canadensis,* ERICA), has been well documented. The synergistic mixture of 2,4-D or dichlorprop and glyphosate is particularly effective at controlling these glyphosate resistant weeds. Other weeds which the mixture of 2,4-D or dichlorprop and glyphosate synergistically control include ivyleaf morningglory (*Ipomoea hederacea;* IPOHE), Canada thistle (*Cirsium arvense;* CIRAR), prickly sida (*Sida spinosa;* SIDSP), velvetleaf (*Abutilon theophrasti;* ABUTH), common ragweed (*Ambrosia artemesifolia;* AMBEL), spiderwort (*Commelina benghalensis;* COMBE), hemp sesbania (*Sesbania exaltata;* SEBEX), field bindweed (*Polygonum convolvulus;* POLCO), and common waterhemp (*Amaranthus rudis;* AMATA).

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinating seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition disclosed herein postemergence to relatively immature undesirable vegetation to achieve the maximum control of weeds.

The substituted phenoxy alkanoic acid derivatives in which R is $CH_3$ contain asymmetric carbon atoms and are capable of existing as a racemic mixture such as dichlorprop or as an individual enantiomer or an enriched enantiomeric mixture such as Dichlorprop-P

By substituted phenoxy alkanoic acid derivatives and glyphosate derivatives is meant the acids themselves and their agriculturally acceptable esters and salts.

Suitable salts include those derived from alkali or alkaline earth metals and those derived from ammonia and amines. Preferred cations include sodium, potassium, magnesium, and aminium cations of the formula:

$$R_1R_2R_3NH^+$$

wherein $R_1$, $R_2$, and $R_3$ each, independently represents hydrogen or $C_1$-$C_{12}$ alkyl, $C_3$-$C_{12}$ alkenyl or $C_3$-$C_{12}$ alkynyl, each of which is optionally substituted by one or more hydroxy, $C_1$-$C_4$ alkoxy, $C_1$-$C_4$ alkylthio or phenyl groups, provided that $R_1$, $R_2$, and $R_3$ are sterically compatible. Preferred amine salts are those derived from ammonia, methylamine, dimethylamine, trimethylamine, isopropylamine, monoethanolamine, diethanolamine, triethanolamine, triisopropanolamine, 2-methylthiopropylamine, bisallylamine, 2-butoxyethylamine, morpholine, cyclo-dodecylamine, or benzylamine. Amine salts are often preferred because they are water-soluble and lend themselves to the preparation of desirable aqueous based herbicidal compositions.

Suitable esters include those derived from $C_1$-$C_{12}$ alkyl, $C_3$-$C_{12}$ alkenyl or $C_3$-$C_{12}$ alkynyl alcohols, such as methanol, *iso*-propanol, butanol, 2-ethylhexanol, butoxyethanol, methoxypropanol, allyl alcohol, propargyl alcohol or cyclohexanol.

In the composition described herein, the weight ratio on an acid equivalent basis of the substituted phenoxy alkanoic acid component to glyphosate component at which the herbicidal effect is synergistic lies within the range of between 5:1 and 1:48. Preferably the weight ratio of the substituted phenoxy alkanoic acid component to the glyphosate component lies within the range of between 3:1 and 1:12 with a weight ratio of between 1:1 and 1:12 being especially preferred.

The rate at which the synergistic composition is applied will depend upon the particular type of weed to be controlled, the degree of control required, and the timing and method of application. In general, the composition disclosed herein can be applied at an application rate of between 100 grams of acid equivalents per hectare (g ae/ha) and 2000 g ae/ha based on the total amount of active ingredients in the composition. An application rate between 200 g ae/ha and 1000 g ae/ha is preferred. In an especially preferred embodiment, the 2,4-D component is applied at a rate between 35 g ae/ha and 560 g ae/ha, the dichlorprop component is applied at a rate between 35 g ae/ha and 280 g ae/ha and the glyphosate component is applied at a rate between 100 g ae/ha and 750 g ae/ha.

The components of the synergistic mixture disclosed herein can be applied either separately or as part of a multipart herbicidal system.

The synergistic mixture disclosed herein can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition disclosed herein include: *amide herbicides* such as allidochlor, beflubutamid, benzadox, benzipram, bromobutide, cafenstrole, CDEA, chlorthiamid, cyprazole, dimethenamid, dimethenamid-P, diphenamid, epronaz, etnipromid, fentrazamide, flupoxam, fomesafen, halosafen, isocarbamid, isoxaben, napropamide, naptalam, pethoxamid, propyzamide, quinonamid and tebutam; *anilide herbicides* such as chloranocryl, cisanilide, clomeprop, cypromid, diflufenican, etobenzanid, fenasulam, flufenacet, flufenican, mefenacet, mefluidide, metamifop, monalide, naproanilide, pentanochlor, picolinafen and propanil; *arylalanine herbicides* such as benzoylprop, flamprop and flamprop-M; *chloroacetanilide herbicides* such as acetochlor, alachlor, butachlor, butenachlor, delachlor, diethatyl, dimethachlor, metazachlor, metolachlor, S-metolachlor, pretilachlor, propachlor, propisochlor, prynachlor, terbuchlor, thenylchlor and xylachlor, *sulfonanilide herbicides* such as benzofluor, perfluidone, pyrimisulfan and profluazol; *sulfonamide herbicides* such as asulam, carbasulam, fenasulam and oryzalin; *antibiotic herbicides* such as bilanafos; *benzoic acid herbicides* such as chloramben, dicamba, 2,3,6-TBA and tricamba; *pyrimidinyloxybenzoic acid herbicides* such as bispyribac and pyriminobac; *pyrimidinylthiobenzoic acid herbicides* such as pyrithiobac; *phthalic acid herbicides* such as chlorthal; *picolinic acid herbicides* such as aminopyralid, clopyralid and picloram; *quinolinecarboxylic acid herbicides* such as quinclorac and quinmerac; *arsenical herbicides* such as cacodylic acid, CMA, DSMA, hexaflurate, MAA, MAMA, MSMA, potassium arsenite and sodium arsenite; *benzoylcyclohexanedione herbicides* such as mesotrione, sulcotrione, tefuryltrione and tembotrione; *benzofuranyl alkylsulfonate herbicides* such as benfuresate and ethofumesate; *carbamate herbicides* such as asulam, carboxazole chlorprocarb, dichlormate, fenasulam, karbutilate and terbucarb; *carbanilate herbicides* such as barban, BCPC, carbasulam, carbetamide, CEPC, chlorbufam, chlorpropham, CPPC, desmedipham, phenisopham, phenmedipham, phenmedipham-ethyl, propham and swep; *cyclohexene oxime herbicides* such as alloxydim, butroxydim, clethodim, cloproxydim, cycloxydim, profoxydim, sethoxydim, tepraloxydim and tralkoxydim; *cyclopropylisoxazole*

*herbicides* such as isoxachlortole and isoxaflutole; *dicarboximide herbicides* such as benzfendizone, cinidon-ethyl, flumezin, flumiclorac, flumioxazin and flumipropyn; *dinitroaniline herbicides* such as benfluralin, butralin, dinitramine, ethalfluralin, fluchloralin, isopropalin, methalpropalin, nitralin, oryzatin, pendimethalin, prodiamine, profluralin and trifluralin; *dinitrophenol herbicides* such as dinofenate, dinoprop, dinosam, dinoseb, dinoterb, DNOC, etinofen and medinoterb; *diphenyl ether herbicides* such as ethoxyfen; *nitrophenyl ether herbicides* such as acifluorfen, aclonifen, bifenox, chlomethoxyfen, chlomitrofen, etnipromid, fluorodifen, fluoroglycofen, fluoronitrofen, fomesafen, furyloxyfen, halosafen, lactofen, nitrofen, nitrofluorfen and oxyfluorfen; *dithiocarbamate herbicides* such as dazomet and metam; *halogenated aliphatic herbicides* such as alorac, chloropon, dalapon, flupropanate, hexachloroacetone, iodomethane, methyl bromide, monochloroacetic acid, SMA and TCA; *imidazolinone herbicides* such as imazamethabenz, imazamox, imazapic, imazapyr, imazaquin and imazethapyr, *inorganic herbicides* such as ammonium sulfamate, borax, calcium chlorate, copper sulfate, ferrous sulfate, potassium azide, potassium cyanate, sodium azide, sodium chlorate and sulfiuic acid; *nitrile herbicides* such as bromobonil, bromoxynil, chloroxynil, dichlobenil, iodobonil, ioxynil and pyraclonil; *organophosphorus herbicides* such as amiprofos-methyl, anilofos, bensulide, bilanafos, butamifos, 2,4-DEP, DMPA, EBEP, fosamine, glufosinate and piperophos; *phenoxy herbicides* such as bromofenoxim, clomeprap, 2,4-DEB, 2,4-DEP, difenopenten, disul, erbon, etnipromid, fenteracol and trifopsime; *phenoxyacetic herbicides* such as 4-CPA, 3,4-DA, MCPA-thioethyl and 2,4,5-T; *phenoxybutyric herbicides* such as 4-CPB, 3,4-DB, and 2,4,5-TB; *phenoxypropionic herbicides* such as cloprop, 4-CPP, 3,4-DP and fenoprop,; *aryloxyphenoxypropionic herbicides* such as chlorazifop, clodinafop, clofop, cyhalofop, diclofop, fenoxaprop, fenoxaprop-P, fenthiaprop, fluazifop, fluazifop-P, haloxyfop, haloxyfop-P, isoxapyrifop, metamifop, propaquizafop, quizalofop, quizalofop-P and trifop; *phenylenediamine herbicides* such as dinitramine and prodiamine; *pyrazolyl herbicides* such as benzofenap, pyrazolynate, pyrasulfotole, pyrazoxyfen, pyroxasulfone and topramezone; *pyrazolylphenyl herbicides* such as fluazolate and pyraflufen; *pyridazine herbicides* such as credazine, pyridafol and pyridate; *pyridazinone herbicides* such as brompyrazon, chloridazon, dimidazon, flufenpyr, metflurazon, norflurazon, oxapyrazon and pydanon; *pyridine herbicides* such as cliodinate, dithiopyr, fluroxypyr, haloxydine, picolinafen, pyriclor, thiazopyr and triclopyr; *pyrimidinediamine herbicides* such as iprymidam and tioclorim; *quaternary ammonium herbicides* such as cyperquat, diethamquat, difenzoquat, diquat, morfamquat and paraquat; *thiocarbamate herbicides* such as butylate, cycloate, di-allate, EPTC, esprocarb, ethiolate, isopolinate, methiobencarb, molinate, orbencarb, pebulate, prosulfocarb, pyributicarb, sulfallate, thiobencarb, tiocarbazil, tri-allate and vernolate; *thiocarbonate herbicides* such as dimexano, EXD and proxan; *thiourea herbicides* such as methiuron; *triazine herbicides* such as dipropetryn, triaziflam and trihydroxytriazine; *chlorotriazine herbicides* such as atrazine, chlorazine, cyanazine, cyprazine, eglinazine, ipazine, mesoprazine, procyazine, proglinazine, propazine, sebuthylazine, simazine, terbuthylazine and trietazine; *methoxytriazine herbicides* such as atraton, methometon, prometon, secbumeton, simeton and terbumeton; *methylthiotriazine herbicides* such as ametryn, aziprotryne, cyanatryn, desmetryn, dimethametryn, methoprotryne, prometryn, simetryn and terbutryn; *triazinone herbicides* such as ametridione, amibuzin, hexazinone, isomethiozin, metamitron and metribuzin; *triazole herbicides* such as amitrole, cafenstrole, epronaz and flupoxam; *triazolone herbicides* such as amicarbazone, bencarbazone, carfentrazone, flucarbazone, propoxycarbazone, sulfentrazone and thiencarbazone-methyl; *triazolopyrimidine herbicides* such as cloransulam, diclosulam, florasulam, flumetsulam, metosulam, penoxsulam and pyroxsulam; *uracil herbicides* such as butafenacil, bromacil, flupropacil, isocil, lenacil and terbacil; *3-phenyluracils; urea herbicides* such as benzthiazuron, cumyluron, cycluron, dichloralurea, diflufenzopyr, isonoruron, isouron, methabenzthiazuron, monisouron and noruron; *phenylurea herbicides* such as anisuron, buturon, chlorbromuron, chloreturon, chlorotoluron, chloroxuron, daimuron, difenoxuron, dimefuron, diuron, fenuron, fluometuron, fluothiuron, isoproturon, linuron, methiuron, methyldymron, metobenzuron, metobromuron, metoxuron, monolinuron, monuron, neburon, parafluron, phenobenzuron, siduron, tetrafluron and thidiazuron; *pyrimidinylsulfonylurea herbicides* such as amidosulfuron, azimsulfuron, bensulfuron, chlorimuron, cyclosulfamuron, ethoxysulfuron, flazasulfuron, flucetosulfuron, flupyrsulfuron, foramsulfuron, halosulfuron, imazosulfuron, mesosulfuron, nicosulfuron, orthosulfamuron, oxasulfuron, primisulfuron, pyrazosulfuron, rimsulfuron, sulfometuron, sulfosulfuron and trifloxysulfuron; *triazinylsulfonylurea herbicides* such as chlorsulfuron, cinosulfuron, ethametsulfuron, iodosulfuron, metsulfuron, prosulfuron, thifensulfuron, triasulfuron, tribenuron, triflusulfuron and tritosulfuron; *thiadiazolylurea herbicides* such as buthiuron, ethidimuron, tebuthiuron, thiazafluron and thidiazuron; and *unclassified herbicides* such as acrolein, allyl alcohol, aminocyclopyrachlor, azafenidin, benazolin, bentazone, benzobicyclon, buthidazole, calcium cyanamide, cambendichlor, chlorfenac, chlorfenprop, chlorflurazole, chlorflurenol, cinmethylin, clomazone, CPMF, cresol, ortho-dichlorobenzene, dimepiperate, endothal, fluoromidine, fluridone, flurochloridone, flurtamone, fluthiacet, indanofan, methazole, methyl isothiocyanate, nipyraclofen, OCH, oxadiargyl, oxadiazon, oxaziclomefone, pentachlorophenol, pentoxazone, phenylmercury acetate, pinoxaden, prosulfalin, pyribenzoxim, pyriftalid, quinoclamine, rhodethanil, sulglycapin, thidiazimin, tridiphane, trimeturon, tripropindan and tritac.

The synergistic composition disclosed herein is particularly useful when used on glyphosate-tolerant, glufosinate-tolerant, 2,4-D-tolerant, dicambatolerant or imiazolinone-tolerant crops. It is generally preferred to use the synergistic composition in combination with herbicides that are selective for the crop being treated and which complement the spectrum of weeds controlled by these compounds at the application rate employed. It is further generally preferred to apply the synergistic composition disclosed herein and other complementary herbicides at the same time, either as a

combination formulation or as a tank mix.

The synergistic composition disclosed herein can generally be employed in combination with known herbicide safeners, such as benoxacor, benthiocarb, brassinolide, cloquintocet (mexyl), cyometrinil, daimuron, dichlormid, dicyclonon, dimepiperate, disulfoton, fenchlorazole-ethyl, fenclorim, flurazole, fluxofenim, furilazole, isoxadifen-ethyl, mefenpyr-diethyl, MG 191, MON 4660, naphthalic anhydride (NA), oxabetrinil, R29148 and N-phenyl-sulfonylbenzoic acid amides, to enhance their selectivity.

In practice, it is preferable to use the synergistic composition disclosed herein in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures disclosed herein are well known to those skilled in the art.

Liquid carriers that can be employed include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, N-methylpyrrolidinone, N-N-dimethylalkylamides, dimethyl sulfoxide and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cotton seed hulls, wheat flour, soybean flour, pumice, wood flour, walnut shell flour, lignin, and the like.

It is usually desirable to incorporate one or more surface-active agents into the compositions disclosed herein. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition disclosed herein is generally from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

2,4-D (dimethylamine salt), dichlorprop (potassium salt) and Glyphomax XRT® herbicide (isopropylamine salt) alone and in combinations were applied to the foliage of rapidly growing plant material utilizing a track sprayer calibrated to deliver an application volume of 187 L/ha. Treated plant material was maintained in a greenhouse that provided a 16-hr photoperiod, supplemented with metal halide-generated light, set to provide a minimum of 500 $\mu molm^{-2}s^{-1}$. The

greenhouse was maintained at a temperature of 26 to 28 °C and a relative humidity of 50 to 70%. Assessment of herbicidal activity was performed visually 14 to 21 days after application.

The expected growth reduction of plant species from the combination of herbicides was calculated utilizing the Colby equation:

$$\text{Expected growth reduction (E)} = X+Y-(X*Y/100)$$

where X is % of growth reduction of a weed at a given concentration of a herbicide (or herbicide formulation) and Y is the % growth reduction of the same species and size weed at a given concentration of an independent herbicide (or herbicide formulation).

Tables I, II, III and IV contain the data for expected and actual herbicidal growth reduction caused by relevant individual herbicides and combinations of these herbicides on agronomically important weeds.

TABLE I: Herbicidal effects of Glyphomax XRT®, 2,4-D and combinations of the two herbicides on select broadleaf weeds (not according to the invention)

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| IPOHE | 210 | 0 | -- | 43 |
| | 0 | 70 | -- | 17 |
| | 210 | 70 | 53 | 93 |
| CIRAR | 210 | 0 | -- | 25 |
| | 0 | 280 | -- | 38 |
| | 210 | 280 | 54 | 95 |
| SIDSP | 420 | 0 | -- | 33 |
| | 0 | 140 | -- | 17 |
| | 420 | 140 | 44 | 72 |
| ABUTH | 210 | 0 | -- | 17 |
| | 0 | 280 | -- | 28 |
| | 210 | 280 | 40 | 60 |
| AMBEL | 105 | 0 | -- | 12 |
| | 0 | 140 | -- | 61 |
| | 105 | 140 | 66 | 96 |
| COMBE | 560 | 0 | -- | 38 |
| | 0 | 140 | -- | 48 |
| | 560 | 140 | 68 | 95 |
| SEBEX | 210 | 0 | -- | 13 |
| | 0 | 280 | -- | 37 |
| | 210 | 280 | 45 | 93 |
| POLCO | 420 | 0 | -- | 18 |
| | 0 | 280 | -- | 32 |
| | 420 | 280 | 44 | 83 |
| AMATA | 210 | 0 | -- | 8 |
| | 0 | 280 | -- | 53 |

(continued)

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| | 210 | 280 | 57 | 99 |
| *Expected injury values were calculated using Colby's equation. | | | | |

Table II: Herbicidal effects of Glyphomax XRT®, 2,4-D and combinations of the two herbicides on glyphosate-susceptible and glyphosate-resistant *Conyza canadensis* (ERICA).

| Species | Glyphomax XRT Rate | 2,4-D Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 35 | -- | 47 |
| | 420 | 35 | 74 | 86 |
| ERICA Glyphosate Resistant | 420 | 0 | -- | 12 |
| | 0 | 70 | -- | 38 |
| | 420 | 70 | 45 | 99 |
| *Expected injury values were calculated using Colby's equation. | | | | |

Table III: Herbicidal effects of Glyphomax XRT®, dichlorprop and combinations of the two herbicides on glyphosate-susceptible and glyphosate-resistant *Conyza canadensis* (ERICA) (not according to the invention)

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| ERICA Glyphosate Susceptible | 420 | 0 | -- | 50 |
| | 0 | 210 | -- | 43 |
| | 420 | 210 | 72 | 92 |
| ERICA Glyphosate Resistant | 420 | 0 | -- | 12 |
| | 0 | 210 | -- | 43 |
| | 420 | 210 | 50 | 93 |
| *Expected injury values were calculated using Colby's equation. | | | | |

Table IV: Herbicidal effects of Glyphomax XRT®, dichlorprop and combinations of the two herbicides on select broadleaf weeds (not according to the invention)

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| IPOHE | 105 | 0 | -- | 12 |
| | 0 | 70 | -- | 68 |
| | 105 | 70 | 72 | 92 |

(continued)

| Species | Glyphomax XRT Rate | Dichlorprop Rate | Expected Injury* | Actual Injury |
|---|---|---|---|---|
| | (g ae/ha) | (g ae/ha) | (% growth reduction) | (% growth reduction) |
| CIRAR | 210 | 0 | -- | 25 |
| | 0 | 70 | -- | 48 |
| | 210 | 70 | 61 | 85 |
| ABUTH | 210 | 0 | -- | 17 |
| | 0 | 70 | -- | 33 |
| | 210 | 70 | 44 | 58 |
| AMBEL | 105 | 0 | -- | 12 |
| | 0 | 280 | -- | 58 |
| | 105 | 280 | 63 | 82 |
| COMBE | 560 | 0 | -- | 38 |
| | 0 | 70 | -- | 80 |
| | 560 | 70 | 88 | 96 |
| SEBEX | 210 | 0 | -- | 13 |
| | 0 | 140 | -- | 38 |
| | 210 | 140 | 46 | 75 |
| POLCO | 420 | 0 | -- | 18 |
| | 0 | 140 | -- | 38 |
| | 420 | 140 | 49 | 87 |
| AMATA | 210 | 0 | -- | 8 |
| | 0 | 280 | -- | 48 |
| | 210 | 280 | 52 | 98 |
| *Expected injury values were calculated using Colby's equation. | | | | |

A field study was conducted at Church Hill, MD where glyphosate-resistant horseweed (ERICA, *Conyza canadensis)* had been observed for 2-3 years prior to the start of this study. The study design was a split-plot with 4 replications per treatment and each plot was 3.048 M wide and 9.144 M long. The environmental conditions at the time of application were as follows: air temperature, 22 °C; wind speed, 6 kph; wind direction, south; releative humidity, 85%; cloud cover, 80%; target foliage moisture, none; soil moisture, moist; soil temperature at 5 cm depth, 21 °C. The treatments were applied using a backpack $CO_2$ sprayer, with six XR8003 flat fan nozzles spaced 46 cm apart (boom length: 2.76 M) and held 40 cm above the plant canopy. The sprayer was operated at 103 kPa and 4,8 kilometers per hour to deliver 187 L of water per hectare. At the time of applications the glyphosate-resistant horseweed were 30 - 38 cm tall and there were between 10 and 20 plants per square meter ($m^2$). The percent visual control of glyphosate-resistant horseweed was rated over the entire plot (27.87 $m^2$) 29 days after application.. In each plot between 278 and 557 glyphosate-resistant horseweed plants were rated, collectively, for percent visual control. The results are tabulated in Table V.

Table V: Herbicidal effects of Glyphomax Plus®, 2,4-D and combinations of the two herbicides on glyphosate-resistant Conyza *canadensis* (ERICA) (not according to the invention)

| Glyphomax Plus Rate | 2,4-D Rate | Expected Injury* | Actual Injury |
|---|---|---|---|
| (g ae/ha) | (g ae/ha) | (% growth reduction) | (% growth reduction) |
| 280 | 0 | -- | 2.5 |
| 0 | 280 | -- | 12.5 |

(continued)

| Glyphomax Plus Rate | 2,4-D Rate | Expected Injury* | Actual Injury |
|---|---|---|---|
| (g ae/ha) | (g ae/ha) | (% growth reduction) | (% growth reduction) |
| 280 | 280 | 14.7 | 35.0 |
| 280 | 0 | -- | 2.5 |
| 0 | 560 | -- | 23.0 |
| 280 | 560 | 24.9 | 43.8 |
| 280 | 0 | -- | 2.5 |
| 0 | 1120 | -- | 36.3 |
| 280 | 1120 | 37.9 | 57.5 |
| 560 | 0 | -- | 8.8 |
| 0 | 280 | -- | 12.5 |
| 560 | 280 | 20.2 | 61.3 |
| 560 | 0 | -- | 8.8 |
| 0 | 560 | -- | 23.0 |
| 560 | 560 | 29.8 | 68.8 |
| 560 | 0 | -- | 8.8 |
| 0 | 1120 | -- | 36.3 |
| 560 | 1120 | 41.9 | 86.8 |
| 840 | 0 | -- | 13.8 |
| 0 | 280 | -- | 12.5 |
| 840 | 280 | 24.6 | 60.0 |
| 840 | 0 | -- | 13.8 |
| 0 | 560 | -- | 23.0 |
| 840 | 560 | 33.6 | 87.5 |
| 840 | 0 | -- | 13.8 |
| 0 | 1120 | -- | 36.3 |
| 840 | 1120 | 45.1 | 74.5 |
| *Expected injury values were calculated using Colby's equation. | | | |

## Claims

1. A method of controlling glyphosate-resistant horseweed, which comprises contacting the glyphosate-resistant horseweed or the locus thereof with or applying to the soil to prevent the emergence of glyphosate-resistant horseweed an herbicidally effective amount of an herbicidal mixture comprising an herbicidally effective amount of

   (a) 2,4-D dimethylamine salt, and
   (b) glyphosate isopropylamine salt,

   wherein the 2,4-D dimethylamine salt is applied at an application rate of 70 g ae/ha and the glyphosate isopropylamine salt is applied at an application rate of 420 g ae/ha.

## Patentansprüche

1. Verfahren zum Bekämpfen von Glyphosat-resistentem Conyza canadensis (Kanadisches Berufkraut), umfassend das In-Kontaktbringen des Glyphosat-resistenten Conyza canadensis oder des Standorts davon mit oder Anwenden auf den Boden zum Verhindern des Auflaufens von Glyphosat-resistentem Conyza *canadensis* einer wirkungsvollen Menge eines herbiziden Gemischs, umfassend eine herbizid wirksame Menge von

   (a) 2,4-D-Dimethylaminsalz und
   (b) Glyphosat-isopropylaminsalz,

   worin das 2,4-D-Dimethylaminsalz mit einer Anwendungsrate von 70 g pro Jahr/ha und das Glyphosat-isopropylaminsalz mit einer Anwendungsrate von 420 g pro Jahr/ha angewendet wird.

## Revendications

1. Procédé de lutte contre la vergerette du Canada résistante au glyphosate, qui comporte

   - le fait de mettre la vergerette du Canada résistante au glyphosate ou son lieu de fréquentation en contact avec
   - ou le fait d'appliquer sur le sol afin d'empêcher la levée de la vergerette du Canada résistante au glyphosate

   une quantité à effet herbicide d'un mélange herbicide comprenant une quantité à effet herbicide :

   a) du sel de diméthylamine de 2,4-D,
   b) et du sel d'isopropylamine de glyphosate,

   étant entendu que le sel de diméthylamine de 2,4-D est appliqué en un taux d'application de 70 grammes d'équivalent acide par hectare et que le sel d'isopropylamine de glyphosate est appliqué en un taux d'application de 420 grammes d'équivalent acide par hectare.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005087007 A1
- US 20060270556 A1
- WO 0232227 A1
- US 4445927 A
- GB 2267825 A


### Non-patent literature cited in the description


- **HARTZLER et al.** *Integrated Crop Management,* 2006, vol. 496, 97
- **BOERBOOM.** *Wisconsin Crop Manager,* 2007, vol. 14, 51
- **FLINT et al.** *Weed Science,* 1989, vol. 37, 12-18
- **WIESE et al.** *Weed Technology,* 1995, vol. 9, 249-254
- Herbicide Handbook of the Weed Science Society of America. 1994, 318